# EUROPEAN PATENT APPLICATION

(11) **EP 2 921 570 A1**
(43) Date of publication of application: **23.09.2015**
(21) Application number: 13854800.3
(22) Date of filing: 07.11.2013
(51) Int. Cl.: C22C 38/00, B62D 25/20, C22C 38/06, F16F 7/00, F16F 7/12, C21D 9/46

(54) **AUTOMOBILE COLLISION ENERGY ABSORBING MEMBER AND MANUFACTURING METHOD THEREFOR**

(30) Priority: 14.11.2012 JP 2012250287; 14.11.2012 JP 2012250286
(71) Applicant: JFE Steel Corporation, Tokyo 100-0011 (JP); Honda Motor Co., Ltd., Minato-ku Tokyo 107-8556 (JP)
(72) Inventor: TAKAGI, Shusaku, Tokyo 100-0011 (JP); OKUDA, Kaneharu, Tokyo 100-0011 (JP); TAMAI, Yoshikiyo, Tokyo 100-0011 (JP); FUJITA, Takeshi, Tokyo 100-0011 (JP); OKITSU, Yoshitaka, Wako-shi Saitama 351-0193 (JP); SUGIURA, Tomoaki, Wako-shi Saitama 351-0193 (JP); TAKAKI, Naoki, Wako-shi Saitama 351-0193 (JP)
(74) Representative: Grünecker Patent- und Rechtsanwälte PartG mbB
(86) International application number: PCT/JP2013/080734
(87) International publication number: WO 2014/077294

(57) **Abstract**

The present invention provides a vehicle collision energy absorbing member formed by shaping a thin steel sheet. At least one of the thin steel sheet and the vehicle collision energy absorbing member has tensile properties of a tensile strength TS of 980 MPa or more and a yield point elongation Y-El of 2 % or more.

## Description

### TECHNICAL FIELD

The present invention relates to a vehicle collision energy absorbing member that axially crushes upon vehicle collision to absorb the collision energy and to a method for manufacturing the same.

### BACKGROUND

Recently, from the viewpoint of protecting the global environment, there has been demand for weight reduction in vehicle bodies. High-strength steel sheets are widely employed these days for vehicle bodies, in particular for components peripheral to the passenger compartment (cabin), which contributes to reduction in weight of the vehicle body by thinning the walls thereof. On the other hand, the strength of high-strength steel sheets used for the engine room and trunk frames (such as the front frame and rear frame) for the purpose of increasing strength only reaches 780 MPa at maximum. The reason is the front frame and the rear frame serve as a collision energy absorbing member that undergoes significant deformation upon collision to absorb energy of the collision, yet strengthening the steel sheets that are the material for these frames causes the ductility to reduce, leading to significant fracture, and yields an unstable deformed shape upon collision, preventing stable buckling. This results in local fractures easily occurring, leading to the problem that the amount of collision energy absorbed does not increase in proportion to the amount of strengthening.

For these reasons, in order to further strengthen the collision energy absorbing member forming the front frame or rear frame and to further reduce the weight of the vehicle body, there is a demand for a collision energy absorbing member that is strengthened and that efficiently absorbs energy upon collision.

To meet such demands, for example, JP 2001-130444 A (PTL 1) discloses a collision energy absorbing member formed from a steel sheet having a microstructure including austenite in an area ratio of 60 % or above. PTL 1 further discloses, as an example of the steel sheet having a microstructure including austenite in an area ratio of 60 % or above, an austenite stainless steel sheet containing 18 % to 19 % Cr and 8 % to 12 % Ni and asserts that a collision energy absorbing member formed by using this steel sheet has improved deformation propagation properties upon collision, thereby ensuring a desired collision energy absorbing performance.

JP H11-193439 A (PTL 2) discloses a high-strength steel sheet that has good workability and high dynamic deformation resistance. The high-strength steel sheet in PTL 2 has a multi-phase containing ferrite and/or bainite, either one of which is used as a main phase, and a tertiary phase containing 3 % to 50 % of retained austenite in volume fraction, and has high dynamic deformation resistance in which, after a pre-deformation of more than 0 % to 10 % or less, a difference between a strength under quasi-static deformation as and a dynamic deformation strength σd (σd - as) satisfies at least 60 MPa, the strength under quasi-static deformation σs being obtained when the steel sheet is deformed at a strain rate of 5 × 10⁻⁴ to 5 × 10⁻³ (1/s), the dynamic deformation strength σd being obtained when the steel sheet is deformed at a strain rate of 5 × 10² to 5 × 10³ (1/s), and the strain hardenability exponent at a strain of 5 % to 10 % satisfies at least 0.130. According to PTL 2, a member manufactured by using a steel sheet having (σd - σs) of at least 60 MPa is capable of absorbing higher energy upon collision as compared to the value estimated from the material steel sheet strength.

JP 2007-321207 A (PTL 3) discloses a high-strength steel sheet having a multi-phase microstructure formed from a ferrite phase and a hard secondary phase contained in an area ratio of 30 % to 70 % with respect to the entire microstructure, the ferrite phase and the hard secondary phase being dispersed into the steel sheet, in which the area ratio of ferrite having a crystal grain diameter of 1.2 µm or less in the ferrite phase is 15 % to 90 %, and the relation between the average grain diameter ds of ferrite having a crystal grain diameter of 1.2 µm or less and an average grain diameter dL of ferrite having a crystal grain diameter exceeding 1.2 µm satisfies dL/ds ≥ 3. The technique disclosed in PTL 3 is capable of improving the balance between strength and ductility that is important upon press forming, yielding a high-strength steel sheet excellent in energy absorbability upon high speed deformation. The high-strength steel sheet thus obtained can be applied to a vehicle body that requires high collision energy absorbing performance.

Furthermore, according to JP 2008-214645 A (PTL 4) and JP 2008-231541 A (PTL 5), studies were made, using a recess introduced rectangular tubular member, on steel sheets capable of being deformed upon axial collapse deformation without crumbling and cracking, and it was found that the amount and size of ferrite, bainite, austenite, and precipitates may be controlled so as to allow the steel sheet to deform without causing crumbling and cracking in the deformation mode upon collision.

Y. Okitsu and N. Tsuji; Proceedings of the 2nd International Symposium on Steel Science (ISSS 2009), pp. 253-256, Oct. 21-24, 2009, Kyoto, Japan: The Iron and Steel Institute of Japan (NPL 1) show examples of a hat profile member that stably crushes into a bellows shape upon collision crushing. This member is formed of a thin steel sheet having a tensile strength of 1155 MPa and an ultrafine grain multi-phase microstructure, in which the n-value is 0.205 for a true strain in a range of 5 % to 10 %. The thin steel sheet described in NPL 1 has a chemical composition based on: 0.15 % C - 1.4 % Si - 4.0 % Mn - 0.05 % Nb, and has a microstructure including ferrite and a secondary phase each being in submicron size, the secondary phase containing 12 % to 35 % of retained austenite. The steel sheet has a high n-value and a large strain hardenability.

### CITATION LIST

### Patent Literature

PTL 1: JP 2001-130444 A
PTL 2: JP H11-193439 A
PTL 3: JP 2007-321207 A
PTL 4: JP 2008-214645 A
PTL 5: JP 2008-231541 A

### Non-patent Literature

NPL 1: Y. Okitsu and N. Tsuji; Proceedings of the 2nd International Symposium on Steel Science (ISSS 2009), pp. 253-256, Oct. 21-24, 2009, Kyoto, Japan: The Iron and Steel Institute of Japan.

With the technique disclosed in PTL 1, the collision energy absorbing member is formed of a steel sheet containing a large amount of austenite. Austenite has a face centered cubic (fcc) crystal structure and thus is characteristically less susceptible to embrittlement and fracture, which can increase to a certain degree the amount of energy absorbed upon collision. However, the steel sheet containing a large amount of austenite as disclosed in PTL 1 has a low tensile strength of about 780 MPa, and furthermore the strength thereof is lower as compared to a steel sheet having a body centered cubic (bcc) structure when deformed at a high strain rate such as upon collision. This steel sheet thus lacks sufficient strength for use as a material for a vehicle collision energy absorbing member. In addition, the Ni and Cr contents need to be increased to obtain a steel sheet containing a large amount of austenite, which leads to an increase in manufacturing cost. With regards to this point as well, the steel sheet of PTL 1 is unsuitable for use in a vehicle body member.

According to the technique disclosed in PTL 2, the hat-type member was only evaluated for a steel sheet having a tensile strength of about 780 MPa at maximum. A member formed from a steel sheet having a tensile strength of less than 980 MPa is easily deformed into a bellows shape upon collision deformation without suffering fracture and breakage, and thus the energy absorbed by the member upon collision deformation can be estimated based on the material properties. By contrast, a member formed from a steel sheet having a tensile strength of 980 MPa or above suffers fracture and breakage upon collision deformation, and thus the energy absorbed by the member upon collision often exhibits a value lower than that expected from the material properties. With the technique in PTL 2, it is difficult to suppress fracture and breakage upon high-speed crushing of a member formed from a high-strength steel sheet having a tensile strength of 980 MPa or above and to stably improve the energy absorbed upon high-speed crushing.

According to the technique disclosed in PTL 3, the steel sheet has a mixed structure of nanocrystal grains and microcrystal grains, in which the type and the microstructure proportion of the hard secondary phase are optimized, yielding a high-strength steel sheet that is high in strength while having high ductility. However, PTL 3 contains no description of forming a collision energy absorbing member using the steel sheet and makes no reference to suppressing fracture and breakage in the member upon collision, which are problems when a member is formed from a steel sheet having a tensile strength of 980 MPa or above, in order to allow the member to undergo stable buckling axially into a bellows shape to efficiently absorb collision energy. PTL 3 is thus unclear regarding such use of the steel sheet.

Furthermore, according to the techniques disclosed in PTL 4 and PTL 5, C, Si, Mn, and one or two element selected from Ti and Nb are added in an appropriate amount for proper control of the amount of ferrite, bainite, and retained austenite in the steel sheet microstructure, the grain sizes thereof, C concentration in the retained austenite, and the size and the number of precipitates, thus yielding a member with excellent collision energy absorption. However, with the techniques disclosed in PTL 4 and PTL 5, it is difficult to stably attain axial collapse deformation without suffering crumbling and cracking in the worked member upon collision, particularly in a steel sheet having a tensile strength of 980 MPa or above.

With the technique described in NPL 1, the member is formed from a steel sheet with an improved n-value, which serves as a measure of the strain hardenability of the material, of 0.2 or more, thus yielding a collision energy absorbing member that crushes into a bellows shape in the axial direction upon collision even with a steel sheet having a tensile strength of 980 MPa or above. In order to form a steel sheet with an n-value of 0.2 or more, however, it is necessary to include a large amount of C or Mn, causing the problem of worsened weldability. Furthermore, elaborate temperature control is necessary at the time of heat treatment, thus reducing yield and increasing costs.

The present invention has been conceived in light of the above problems with conventional techniques and provides a vehicle collision energy absorbing member, and a method for manufacturing the same, that is high strength, with a tensile strength TS of 980 MPa or above, and that has excellent axial collision energy absorbing performance upon collision. Stating that a member has "excellent axial collision energy absorbing performance upon collision" means that the member undergoes stable buckling in the axial direction and undergoes collapse deformation into a bellows shape upon vehicle collision, thus efficiently absorbing energy of the collision. The expression "excellent axial collapse stability" is also used.

### SUMMARY

To achieve the above object, the inventors of the present invention produced a member with a hat-shaped cross section using a high-strength thin steel sheet having a tensile strength TS of 980 MPa or above and intensively studied the deformation behavior of the member upon subjecting the member to axial collision deformation. The inventors thus discovered that cracks occurring when the member is axially crushed mainly occur in the first buckling portion, and that for stable buckling of the member and collapse deformation into a bellows shape, it is important to avoid the cracks occurring in the first buckling portion. To that end, the inventors conceived of the importance of generating the next buckling before deformation exceeding the fracture limit concentrates in the first buckling portion.

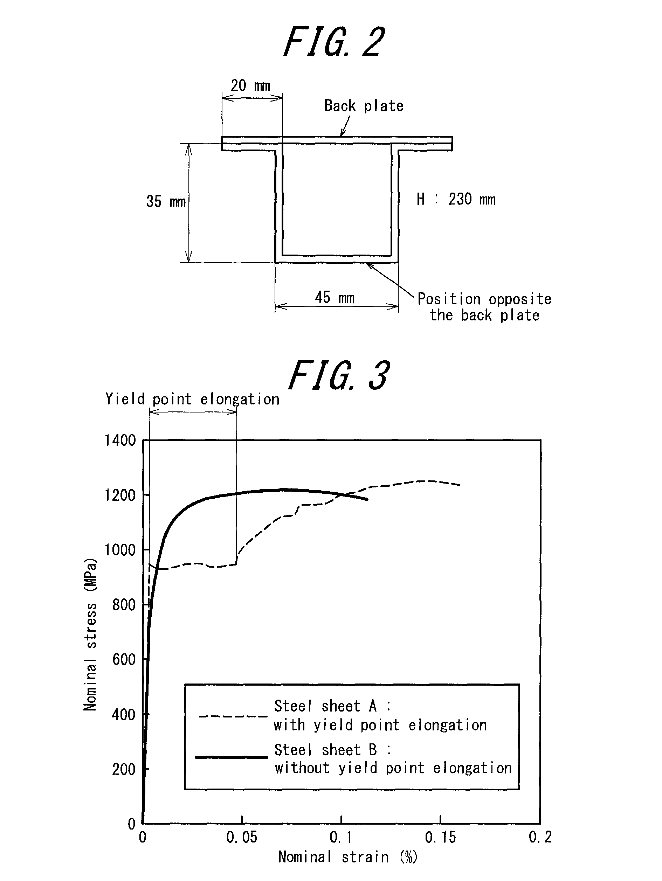

First, the results of experiments, performed by the inventors, serving as a foundation for the present invention are described. With two types of materials, high-strength thin steel sheets (sheet thickness: 1.2 mm) A and B with tensile strength TS of 980 MPa or more, hat-shaped cross-sections were formed by bending. A steel sheet of the same type as the formed sheets was used as a back plate and joined by spot welding to yield a member (height H in axial direction: 230 mm) with the cross-sectional shape illustrated in FIG. 2. After formation into a hat shape, a JIS No. 5 tensile test piece (GL: 50 mm) was collected from the flat portion at a position opposite the back plate of the member so that the tensile direction coincided with the axial direction of the member. Tensile tests were then performed in conformity with JIS Z 2241 to measure tensile strength TS and yield point elongation Y-El. For steel sheet A, TS was 1249 MPa and Y-El was 4.3 %. For steel sheet B, TS was 1215 MPa and Y-E1 was 0 %. FIG. 3 shows stress-strain curves for these steel sheets.

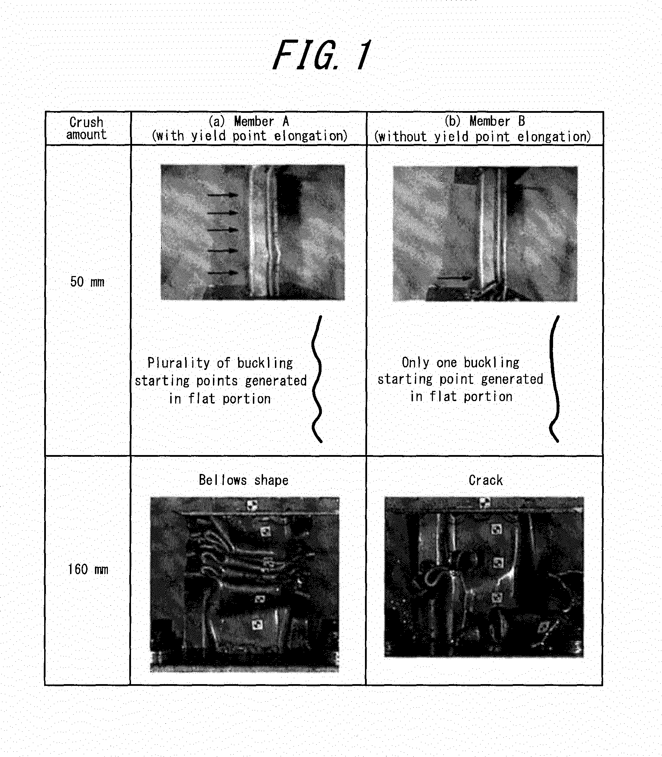

A weight of 110 kgf at a speed corresponding to 50 km/h was caused to collide against these members in the axial direction so as to crush the members 50 mm. After crushing, the deformation state of the members was visually observed. FIG. 1 illustrates the deformation state of the members. In member A that used steel sheet A, a plurality of buckling starting points were generated in the flat portion of the member, whereas in member B that used steel sheet B, only one buckling starting point was generated in the flat portion of the member, and cracks occurred. FIG. 1 also illustrates the deformation status of the members when crushed 160 mm. Member A collapsed into a bellows shape, whereas member B ruptured (cracked). From these results, the inventors discovered that by providing a state that allows for at least a certain yield point elongation to be achieved in the thin steel sheet used in the member, the next buckling can be caused to occur before cracks occur in the first buckling portion, so that even a member with TS of 980 MPa or more can be crushed into a bellows shape.

At present, the reason why a member using a thin steel sheet in a state allowing for the achievement of yield point elongation generates a plurality of buckling starting points and collapses in a bellows shape is unclear, yet the following observations can be made. When the weight first impacts the member, stress waves propagate through the member, and a stress distribution with a constant period occurs in the member. When the thin steel sheet is in a state that generates yield point elongation, it is thought that only the portions with high stress will yield (i.e. undergo plastic deformation), thus generating a plurality of buckling starting points. On the other hand, when the thin steel sheet is in a state that does not generate yield point elongation, it is thought that both high stress portions and low stress portions can undergo plastic deformation, making it difficult for a non-uniform amount of plastic deformation to occur and thus inhibiting the occurrence of buckling starting points.

Even if yield point elongation cannot be achieved at the stage of a thin steel sheet, if the member can achieve yield point elongation at the stage when the thin steel sheet is shaped into a vehicle collision energy absorbing member, the same effects can be attained. The inventors discovered that by performing heat treatment under predetermined conditions after shaping a thin steel sheet with tensile strength TS of 980 MPa or more, the tensile strength TS of the member can be maintained at 980 MPa or more while realizing a state allowing for the achievement of yield point elongation.

Based on these discoveries, Embodiment 1 of the present invention is a vehicle collision energy absorbing member formed by shaping a thin steel sheet having tensile properties of a tensile strength TS of 980 MPa or more and a yield point elongation Y-El of 2 % or more. According to this member, the next buckling portion can be generated before cracks occur in the first buckling portion, and the member can collapse in a bellows shape.

Embodiment 2 of the present invention is a vehicle collision energy absorbing member that is formed by shaping a thin steel sheet and that has tensile properties of a tensile strength TS of 980 MPa or more and a yield point elongation Y-E1 of 2 % or more. According to this member, the next buckling portion can be generated before cracks occur in the first buckling portion, and the member can collapse in a bellows shape.

The present invention has been completed on the basis of these discoveries. The primary features of the present invention are described below.
(1) A vehicle collision energy absorbing member formed by shaping a thin steel sheet,
   at least one of the thin steel sheet and the vehicle collision energy absorbing member having tensile properties of a tensile strength TS of 980 MPa or more and a yield point elongation Y-El of 2 % or more.
(2) The vehicle collision energy absorbing member according to (1), wherein
   the thin steel sheet includes a chemical composition containing, by mass%: C: 0.05 % to 0.30 %; Si: 0.01 % to 1.6 %; Mn: 1.0 % to 3.5 %; P: 0.060 % or less; S: 0.0050 % or less; Al: 0.01 % to 1.5 %; N: 0.0060 % or less; and the balance being Fe and incidental impurities,
   the thin steel sheet has a microstructure including, in volume fraction with respect to the entire microstructure, a ferrite phase by 0 % to 95 %, at least one selected from a tempered martensite phase, tempered bainite phase, and bainite phase by a total of 5 % to 100 %, and the balance being at least one selected from a martensite phase, retained austenite phase, pearlite, and cementite by a total of 0% to 5%, and
   the thin steel sheet has the tensile properties of a tensile strength TS of 980 MPa or more and a yield point elongation Y-El of 2 % or more.
(3) The vehicle collision energy absorbing member according to (1), wherein the vehicle collision energy absorbing member has the tensile properties of a tensile strength TS of 980 MPa or more and a yield point elongation Y-El of 2 % or more.
(4) The vehicle collision energy absorbing member according to (3), wherein the vehicle collision energy absorbing member is formed by application of heat treatment in a temperature range of 200 °C or higher and lower than 700 °C after shaping.
(5) The vehicle collision energy absorbing member according to (3) or (4), wherein
   the vehicle collision energy absorbing member includes a chemical composition containing, by mass%: C: 0.05 % to 0.30 %; Si: 0.01 % to 1.6 %; Mn: 1.0 % to 3.5 %; P: 0.060 % or less; S: 0.0050 % or less; Al: 0.01 % to 1.5 %; N: 0.0060 % or less; and the balance being Fe and incidental impurities.
(6) The vehicle collision energy absorbing member according to any one of (3) to (5), wherein the vehicle collision energy absorbing member has a microstructure including, in volume fraction with respect to the entire microstructure, a ferrite phase by 0 % to 80 %, at least one selected from a tempered martensite phase, tempered bainite phase, and bainite phase by a total of 20 % to 100 %, and the balance being at least one selected from a martensite phase, retained austenite phase, pearlite, and cementite by a total of 0% to 5%.
(7) A method for manufacturing a vehicle collision energy absorbing member, comprising:
   (a) manufacturing a thin steel sheet having a tensile strength TS of 980 MPa or more;
   (b) forming the thin steel sheet into a shape of a vehicle collision energy absorbing member; and
   (c) after step (b), applying heat treatment to the vehicle collision energy absorbing member by maintaining the vehicle collision energy absorbing member for 50 s or more in a heating temperature range of 200 °C or higher and lower than 700 °C to set tensile properties of the vehicle collision energy absorbing member to a tensile strength TS of 980 MPa or more and a yield point elongation Y-El of 2 % or more.
(8) The method according to (7), wherein
   the thin steel sheet includes a chemical composition containing, by mass%: C: 0.05 % to 0.30 %; Si: 0.01 % to 1.6 %; Mn: 1.0 % to 3.5 %; P: 0.060 % or less; S: 0.0050 % or less; Al: 0.01 % to 1.5 %; N: 0.0060 % or less; and the balance being Fe and incidental impurities.

A vehicle collision energy absorbing member according to an embodiment of the present invention is high strength, with a tensile strength TS of 980 MPa or more, and also has excellent axial collision energy absorbing performance upon collision. A method for manufacturing a vehicle collision energy absorbing member according to an embodiment of the present invention provides a vehicle collision energy absorbing member that is high strength, with a tensile strength TS of 980 MPa or more, and also has excellent axial collision energy absorbing performance upon collision.

### BRIEF DESCRIPTION OF THE DRAWINGS

The present invention will be further described below with reference to the accompanying drawings, wherein:
FIG. 1 shows the external appearance of members after buckling, the yield point elongation being 4.3 % for a starting steel sheet A of material A and 0 % for a starting steel sheet B of material B;
FIG. 2 schematically shows the cross-sectional shape of the member used in the examples; and
FIG. 3 shows stress-strain curves for steel sheet A (TS: 1249 MPa, Y-El: 4.3 %) and steel sheet B (TS: 1215 MPa, Y-El: 0 %).

### DETAILED DESCRIPTION

The present invention is described below in further detail. In the present disclosure, the vehicle collision energy absorbing member is also simply referred to as the "member".

### Embodiment 1

A vehicle collision energy absorbing member according to Embodiment 1 of the present invention is described below.

First, the structure of the vehicle collision energy absorbing member according to Embodiment 1 is described. This member is formed by using a thin steel sheet as the material steel sheet and working the material steel sheet into a predetermined shape. While the shape need not be limited, the term "predetermined shape" as used herein preferably refers to a cylindrical shape or a polygonal cross-sectional shape that is capable of efficiently absorbing collision energy in the axial direction. The method of shaping the material steel sheet also need not be limited, and any generally-employed method, such as press forming or bend forming, may be used.

As the thin steel sheet that becomes the material steel sheet, a thin steel sheet having tensile properties of a tensile strength TS of 980 MPa or more and a yield point elongation Y-El of 2 % or more is selected and used. In the present disclosure, the "thin steel sheet" refers to a steel sheet having a sheet thickness of 3.2 mm or less.

If the yield point elongation of the material steel sheet is less than 2 %, then when the member collapses in the axial direction, a crack occurs in the bending deformation portion (buckling portion) at the time of initial buckling, and subsequently buckling does not progress into a bellows shape. Therefore, stable axial collapse is not attained, preventing a guarantee of the desired high collision energy absorbing performance. Forming a thin steel sheet with a yield point elongation Y-El of 2 % or more into a collision energy absorbing member, however, yields a member having collision energy absorbing performance, since even if the member is axially crushed, a plurality of buckling starting points are formed, and the member stably crushes axially into a bellows shape. The yield point elongation Y-El is calculated in conformity with JIS Z 2241 by collecting a tensile test piece (JIS No. 5 tensile test piece: GL 50 mm) from the thin steel sheet and performing a tensile test with a strain speed of 0.003/s to 0.004/s.

In the present embodiment, the thin steel sheet has a particular chemical composition and microstructure and has tensile properties of a tensile strength TS of 980 MPa or more and a yield point elongation Y-El of 2 % or more. When selecting the material steel sheet, it suffices to collect a test piece from the thin steel sheet in conformity with JIS Z 2201, to perform a tensile test in conformity with JIS Z 2241, and to measure the yield point elongation Y-El and the tensile strength TS. No complicated testing need be performed.

Next, a method for manufacturing the member of the present embodiment is described. In the present embodiment, a thin steel sheet is used as the material steel sheet, and the material steel sheet is shaped by a generally known method, such as press forming or bend forming, to form a member with predetermined dimensions and shape, thus yielding a vehicle collision energy absorbing member.

Next, the chemical composition of the thin steel sheet used in the present embodiment is described. Hereinafter, the mass% of each component is simply denoted by %.

### C: 0.05 % to 0.30 %

Carbon (C) is an element that increases the volume fraction of a hard phase through improving quench hardenability to thereby increase steel strength. To ensure the desired high strength, 0.05 % or more of C needs to be contained in steel. On the other hand, C content over 0.30 % tends to incur significant deterioration in spot weldability and significant reduction in bending property. Therefore, the C content is set to 0.05 % to 0.30 %, preferably 0.22 % or less.

### Si: 0.01 % to 1.6 %

Silicon (Si) is an element that contributes to improving strength through solid solution strengthening. Si also improves ductility and formability, facilitating member formation. To obtain these effects, 0.01 % or more of Si needs to be contained in steel. On the other hand, if the Si content exceeds 1.6 %, Si oxides concentrate on the steel sheet surface, causing chemical conversion treatment failure and bare spots. Therefore, the Si content is set to 0.01 % to 1.6 %, preferably 0.1 % to 1.0 %.

### Mn: 1.0 % to 3.5 %

Manganese (Mn) effectively contributes to improving strength. To obtain this effect, 1.0 % or more of Mn needs to be contained in steel. On the other hand, excessive Mn content exceeding 3.5 % leads to a significant reduction in weldability. Furthermore, in this case, Mn concentrates as an oxide on the steel sheet surface, which may lead to bare spots. For these reasons, the Mn content set to is 1.0 % to 3.5 %, preferably 1.5 % to 2.8 %.

### P: 0.060 % or less

Phosphorus (P) contributes to improving strength yet causes weldability to deteriorate. Such an adverse effect becomes significant when the P content exceeds 0.060 %. The P content is therefore limited to 0.060 % or less. Since an excessive reduction of the P content increases costs in the steelmaking process, the P content is preferably at least 0.001 %. P content is preferably 0.025 % or less and more preferably 0.015 % or less.

### S: 0.0050 % or less

Sulfur (S) is an element that causes red brittleness and may cause trouble in the manufacturing process when contained in a large amount. Furthermore, in the steel sheet S forms MnS, which remains as sheet-like inclusions after cold rolling, and thus causes the ultimate deformability of the material to deteriorate, impairing formability. This adverse effect exerted by S becomes significant when the S content exceeds 0.0050 %. The S content is therefore set to 0.0050 % or less. Since an excessive reduction of the S content increases the desulfurizing cost in the steelmaking process, the S content is preferably at least 0.0001 %. The S content is also preferably 0.0030 % or less.

### Al: 0.01 % to 1.5 %

Aluminum (Al) is an element which is effective as a deoxidizer in the steelmaking process and is also useful for separating non-metal inclusions, which would reduce formability, in slag. Furthermore, Al has a function of concentrating C in austenite so as to stabilize the austenite, thereby improving formability by improving elongation and the n-value. To obtain this effect, 0.01 % or more of Al needs to be contained in steel. On the other hand, Al content exceeding 1.5 % results in not only an increase in material cost but also a significant deterioration in weldability. The Al content is therefore set to 0.01 % to 1.5 %, preferably 0.02 % to 1.0 %.

### N: 0.0060 % or less

Nitrogen (N) forms a solute to improve strength of steel, yet excessive N content reduces ductility. In view of purifying ferrite to improve ductility, the N content is preferably suppressed to a minimum. The effects of the present invention are unimpaired, however, when the N content is 0.0060 % or less, and hence the N content is set to be 0.0060 % or less. Note that an excessive reduction of the N content results in an increase in steelmaking cost, and thus the N content is preferably at least 0.0001 %.

The balance other than the aforementioned components includes Fe and incidental impurities.

Next, the microstructure of the thin steel sheet is described. The thin steel sheet has a microstructure including, in volume fraction with respect to the entire microstructure, a ferrite phase by 0 % to 95 % and at least one selected from a tempered martensite phase, tempered bainite phase, and bainite phase by a total of 5 % to 100 %, the balance being at least one selected from a martensite phase, retained austenite phase, pearlite, and cementite by a total of 0 % to 5 %.

The microstructure of a thin steel sheet that guarantees a TS of 980 MPa or more and a yield point elongation Y-El of 2 % or more preferably includes at least one selected from a tempered martensite phase, tempered bainite phase, and bainite phase, which are hard phases, by a total of 5 % or more. While these are the main microstructures, a ferrite phase may be included in volume fraction by 0 % to 95 %. Including a ferrite phase yields a multi-phase with the ferrite phase and the hard phase(s), and therefore elongation and stretchability increase, which is particularly preferable when manufacturing products that need to be formed by elongation or stretching.

If the volume fraction of the ferrite phase exceeds 95 %, however, it is difficult to ensure a TS of 980 MPa or more. Therefore, the volume fraction of the ferrite phase is set to be 95 % or less, including the case of 0 %. The ferrite phase may have any grain diameter, yet from the perspective of guaranteeing the desired yield point elongation, a small grain diameter is preferable, such as 10 µm or less.

The balance other than the aforementioned tempered martensite phase, tempered bainite phase, bainite phase, and ferrite phase may be at least one selected from a martensite phase, retained austenite phase, pearlite, and cementite by a total of 0 % to 5 % in volume fraction. A non-tempered martensite phase introduces mobile dislocation at the time of formation, and a retained austenite phase makes it difficult for the yield point to occur, since the deformation initial stress is low, thereby impeding the guarantee of a desired yield point elongation. Accordingly, each of the above is preferably included by 2 % or less, including the case of 0 %, to as small a degree as possible. Furthermore, pearlite and cementite reduce ductility. For these reasons, when included, at least one selected from a martensite phase, retained austenite phase, pearlite, and cementite is included by a total of 0% to 5%.

The tempered martensite phase, tempered bainite phase, and bainite phase may have any average grain diameter, yet setting each to be 10 µm or less is preferable from the perspective of ensuring yield point elongation. The martensite phase, retained austenite phase, and pearlite may also have any average grain diameter, yet setting each to be 10 µm or less is preferable from the perspective of ensuring yield point elongation. The average grain diameter of each phase may be calculated by classifying each phase using a photograph taken by a SEM at 500x to 3,000x magnification and applying a cutting method to each phase.

Using a microstructure with as little ferrite phase as possible makes it easier to ensure a TS of 980 MPa or more, yet including a ferrite phase by approximately 5 % or less yields excellent stretch flangeability and bendability, which is particularly suitable when manufacturing products that need to be formed by stretch flanging or bending.

Next, a preferred method for manufacturing the thin steel sheet used in the present embodiment is described.

To steel material with the above chemical composition, preferably either a hot rolling process is applied to yield a thin hot rolled steel sheet, or a hot rolling process, cold rolling process, and annealing process are applied in this order to yield a thin steel sheet. Subsequently, the thin steel sheet may be plated as necessary.

The method for manufacturing the steel material need not be limited, and any conventional steel melting method such as a converter may be used to prepare molten steel having the aforementioned chemical composition, which may be subjected to any conventional casting method, such as a continuous casting method, an ingot casting and blooming method, or the like, to obtain a thick slab (as the steel material). The slab (steel material) thus obtained is preferably subjected to a hot rolling process either after being once cooled and then re-heated or directly without undergoing heat treatment after casting.

The heating temperature in the hot rolling process is preferably in a range of 1000 °C to 1300 °C. A heating temperature below 1000 °C fails to attain sufficient uniformity. Conversely, a high heating temperature exceeding 1300 °C results in significant oxidation loss, leading to reduced yield and tending to limit the conditions for achieving the yield point elongation.

In the hot rolling process, the slab is subjected to rough rolling and finish rolling so as to be obtained as a hot rolled sheet, which is wound up into a coil.

The conditions of rough rolling are not specifically limited, as long as a sheet bar can be formed to have desired dimensions and shape. Furthermore, in the finish rolling, the finishing delivery temperature is preferably set within a range of 850 °C to 950 °C. A finishing delivery temperature falling out of the aforementioned range fails to make the hot rolled sheet microstructure uniform, leading to deterioration in workability such as elongation and bending property.

After the completion of the finish rolling, the steel sheet is preferably subjected to cooling at an average cooling rate of 5 °C/s to 200 °C/s in a temperature range of up to 750 °C. The generation of a band-like texture including two phases, namely a ferrite phase and a pearlite phase, can thus be suppressed.

The coiling temperature is preferably set in a range from 350 °C to 650 °C. A coiling temperature falling below 350 °C increases the steel sheet strength excessively, which makes it difficult to pass the sheet to the next step and also to perform a cold rolling process thereon. On the other hand, a coiling temperature exceeding 650 °C leads to excessive generation of an internal oxidation layer on the steel sheet surface, which makes formability deteriorate significantly.

Next, the hot rolled sheet is subjected to a cold rolling process in which the sheet is subjected to pickling and then to cold rolling so as to be obtained as a cold rolled sheet. The cold rolling reduction rate in the cold rolling is preferably at least 30 % for the purpose of refining the microstructure. When the cold rolling load is large, the hot rolled sheet may be annealed to be softened. If the cold rolling reduction rate is too large, the rolling load increases, making it difficult to perform cold rolling. Therefore, the cold rolling reduction rate is preferably kept to 70 % or less.

The resultant cold rolled sheet is then subjected to an annealing process by subjecting the steel sheet to annealing to obtain a cold rolled annealed sheet. In the annealing process, the microstructure proportion and the type of microstructure are controlled by controlling the ferrite and austenite volume fractions at the time of annealing, then cooling, optimizing the ferrite volume fraction that is ultimately obtained, and cooling again.

In the present embodiment, the annealing temperature is preferably 750 °C to 900 °C. An annealing temperature falling below 750 °C causes strain generated during the cold rolling to remain, which makes formability deteriorate. Conversely, at a temperature exceeding 900 °C, the microstructural change is small, leading to increased costs.

The annealing temperature is preferably held in the aforementioned annealing temperature range for 10 s to 600 s. A holding time of less than 10 s causes strain during the cold rolling to remain, which makes formability deteriorate. On the other hand, even if the annealing process is performed for a long time exceeding 600 s, hardly any structural change can be identified, and moreover productivity during the annealing process worsens.

After holding at the aforementioned annealing temperature, the average cooling rate until reaching a temperature range of 200 °C or below is preferably set to 1 °C/s to 2000 °C/s. An average cooling rate of less than 1 °C/s requires an extended cooling time, leading to increased cost. On the other hand, to achieve rapid cooling exceeding 2000 °C/s, a large facility is required, which is a factor in increased cost. Overaging treatment may be applied to cool the steel sheet from the annealing temperature to a temperature range of 350 °C to 500 °C and then hold the steel sheet in the temperature range of 350 °C to 500 °C for at least 10 s, preferably for at least 120 s, before cooling to room temperature.

When not performing overaging treatment, tempering is subsequently performed after cooling in the annealing process. The tempering may be performed in a temperature range of 100 °C to 600 °C, yet in order to achieve a yield point elongation Y-E1 of 2 % or more, the tempering is preferably performed at 400 °C or higher for 360 s or more and at 200 °C or higher and lower than 400 °C for a longer time of 900 s or more.

During cooing in the annealing process, the thin steel sheet may be subjected to a galvannealing process to form a galvannealed layer by dipping the sheet into a hot dip galvanizing bath, then adjusting the zinc coating amount by means of, for example, gas wiping, and further heating to a predetermined temperature. Furthermore, after the annealing process, the steel sheet may, without any problem, be subjected to electroplating of zinc or nickel and to skin pass rolling, which are generally employed for a steel sheet for a vehicle.

The cold rolled steel sheet obtained through the aforementioned processes is a high strength thin steel sheet, with a tensile strength TS of 980 MPa or more and a yield point elongation Y-El of 2 % or more.

### Embodiment 2

A vehicle collision energy absorbing member, and a method for manufacturing the same, according to Embodiment 2 of the present invention is described below.

First, the structure of the vehicle collision energy absorbing member according to Embodiment 2 is described. This member is formed by using a thin steel sheet as the material steel sheet and working the material steel sheet into a predetermined shape. The "predetermined shape" and the method of shaping the material steel sheet are as in Embodiment 1.

Any thin steel sheet may be used in the present embodiment as long as, after producing the member, a tensile strength TS of 980 MPa or more and a yield point elongation Y-El of 2 % or more can be ensured. For example, to ensure the yield point elongation after forming the member, in the case of applying heat treatment, as long as a yield point elongation of 2 % or more can be ensured after heat treatment, then the thin steel sheet before formation may have a yield point elongation of less than 2 % or even 0 %.

To form a member that has excellent axial collision energy absorbing performance by absorbing collision energy through collapsing stably into a bellows shape upon collision, it is necessary for the thin steel sheet, after production of the member, to have a yield point elongation Y-E1 of 2 % or more. On the other hand, from the perspective of shaping the member, a low yield point elongation for the thin steel sheet that is the raw material is preferable. Therefore, in the present embodiment, the yield point elongation Y-El of the thin steel sheet is preferably less than 2 %. The tensile strength TS of the thin steel sheet is preferably 980 MPa or more so as to ensure a strength of 980 MPa or more after production of the member.

If the yield point elongation Y-El of the member is less than 2 %, then when the member collapses in the axial direction, a crack occurs in the bending deformation portion at the time of initial buckling, and subsequently buckling does not progress into a bellows shape. Therefore, stable buckling of the member cannot be attained. Accordingly, the vehicle collision energy absorbing member cannot effectively absorb collision energy.

The yield point elongation is calculated in conformity with JIS Z 2241 by collecting a tensile test piece from the member and performing a tensile test with a strain speed of 0.003/s to 0.004/s. The direction in which the test piece is collected is preferably such that the longitudinal direction of the member is nearly parallel to the longitudinal direction of the test piece. The position for collecting the test piece and the shape of the test piece are not specified, yet insofar as possible, the test piece preferably has a parallel portion length of 10 mm or more and a parallel portion width of 2 mm or more and is preferably collected from a flat portion.

The member of the present embodiment may have any chemical composition, microstructure, and the like, yet in order to ensure a tensile strength TS of 980 MPa or more for the member, the member preferably has a similar chemical composition to Embodiment 1.

Next, a suitable microstructure for the member of the present embodiment is described. The member of the present embodiment has the aforementioned chemical composition, and a stress-strain curve obtained by a tensile test using a tensile test piece cut from the member exhibits tensile properties of a tensile strength TS of 980 MPa or more and a yield point elongation Y-E1 of 2 % or more.

A member with these properties has a microstructure including, in volume fraction with respect to the entire microstructure, a ferrite phase by 0 % to 80 % and at least one selected from a tempered martensite phase, tempered bainite phase, and bainite phase by a total of 20 % to 100 %, the balance being at least one selected from a martensite phase, retained austenite phase, pearlite, and cementite by 0 % to 5 %.

If the volume fraction of the ferrite phase exceeds 80 %, it is difficult to ensure a TS of 980 MPa or more for the member. Accordingly, the volume fraction of the ferrite phase is preferably 80 % or less. The ferrite phase may have any particle diameter, yet to ensure a yield point elongation of 2 % or more, the particle diameter is preferably 10 µm or less. In the present embodiment, the case of not including a ferrite phase (0 %) is included.

Other than the ferrite phase, at least one selected from a tempered martensite phase, tempered bainite phase, and bainite phase is preferably included. The tempered martensite phase, tempered bainite phase, and bainite are all hard phases, and to ensure the desired member strength (tensile strength TS: 980 MPa or more), at least one of these phases is preferably included by a total of 20 % or more in volume fraction. The tempered martensite phase, tempered bainite phase, and bainite phase exhibit a lath-shaped microstructure with carbide precipitation, yet the tempered martensite phase, tempered bainite phase, and bainite phase have extremely similar shapes under a microscope, and it is difficult to distinguish their volume fractions exactly. Therefore, the total thereof is used. On the other hand, neither a non-tempered martensite phase nor a retained austenite phase is accompanied by carbide precipitation.

To achieve both the desired tensile strength and yield point elongation, a microstructure formed by a ferrite phase and a tempered martensite phase is preferable. In order to achieve the desired tensile strength, a low temperature transformation phase such as a martensite phase is preferably utilized. A martensite phase reduces the yield point elongation, however, due to mobile dislocation into the microstructure and to the introduction of residual stress, thus making it difficult to ensure a yield point elongation Y-E1 of 2 % or more. In a tempered martensite phase, solute carbon in the martensite phase fixes or precipitates along dislocations, reducing mobile dislocation, and residual stress is also relieved, thus facilitating the achievement of the desired yield point elongation Y-El.

The balance other than the ferrite phase, tempered martensite phase, tempered bainite phase, and bainite phase is formed by at least one selected from a martensite phase, a retained austenite phase, pearlite, and cementite, preferably by a total of 0 % to 5 %. To ensure a yield point elongation of 2 % or more, however, both the martensite phase and retained austenite phase are preferably minimized, and the volume fraction of each is more preferably 2 % or less. Pearlite and cementite reduce ductility. Hence from the perspective of improving formability, pearlite and cementite are more preferably each limited to 2 % or less.

Furthermore, the tempered martensite phase, tempered bainite phase, and bainite phase may have any average grain diameter, yet setting each to be 10 µm or less is preferable from the perspective of ensuring yield point elongation. The martensite phase, retained austenite phase, and the like may also have any average grain diameter, yet setting each to be 10 µm or less is preferable from the perspective of ensuring yield point elongation. The grain diameter of each phase refers to the grain diameter that can be calculated by judging the region of each phase visually and determining the grain boundary or the heterophase boundary visually.

The member of the present embodiment preferably has the aforementioned chemical composition and the aforementioned microstructure, and a stress-strain curve obtained by a tensile test using a tensile test piece cut from the member exhibits tensile properties of a tensile strength TS of 980 MPa or more and a yield point elongation Y-E1 of 2 % or more. The member also has excellent axial collision energy absorbing performance.

Next, a preferred method for manufacturing the member of the present embodiment is described. The member of the present embodiment is formed by working a material steel sheet. The material steel sheet preferably has the aforementioned chemical composition, and when the material steel sheet is a thin steel sheet with a tensile strength TS of 980 MPa or more, the material steel sheet is formed into a member with a predetermined shape, and after formation, heat treatment is preferably applied by heating the member to a heating temperature in a temperature range of 200 °C or higher and lower than 700 °C and maintaining the member for 50 s or more in the temperature range. The member is more preferably maintained in the temperature range for 100 s or more. At the time of heat treatment, the member may be fixed with a die or the like to prevent deformation of the member.

Through this heat treatment, while maintaining the high strength of a TS of 980 MPa or more, C in the member can be fixed to dislocations introduced during formation, achieving yield point elongation, and the yield point elongation can be achieved in every portion of the member. As a result, when the member collapses, a plurality of buckling starting points are more easily generated, making it easier for the member to collapse stably into a bellows shape.

If the heating temperature during heat treatment reaches a high temperature of 700 °C or more, the strength of the member is easily reduced, preventing the member from being maintained at a high strength with a TS of 980 MPa or more. For this reason, the heating temperature of the heat treatment is preferably a low temperature, yet at a temperature below 200 °C, the diffusion rate (travel speed) of C in the member becomes slow, making a long time necessary until the dislocations introduced during formation are sufficiently fixed. Therefore, the heating temperature for heat treatment is set to be 200 °C or higher and lower than 700 °C, preferably 250 °C or higher and 600 °C or lower. For a galvanized steel sheet, the heating temperature is preferably a low temperature of 500 °C or lower from the perspective of plating properties.

The holding time at the aforementioned heating temperature in the heat treatment is preferably 50 s or more. If the holding time is less than 50 s, the dislocations introduced during formation cannot be sufficiently fixed. The holding time is more preferably 100 s or more and even more preferably 300 s or more and 1800 s or less.

Next, a preferred method for manufacturing the thin steel sheet that preferably has a tensile strength of 980 MPa or more used in the present embodiment is described.

Steel raw material having the aforementioned chemical composition is preferably subjected to a hot rolling process, cold rolling process, and annealing process in this order to yield a high-strength thin steel sheet with a tensile strength TS of 980 MPa or more.

The method for manufacturing the steel raw material need not be limited.

The heating temperature in the hot rolling process is not limited to a particular temperature yet is preferably in the same range as in Embodiment 1.

In the hot rolling process, the slab is subjected to rough rolling and finish rolling so as to be obtained as a hot rolled sheet, which is wound up into a coil. The conditions are not limited yet are preferably in the same range as in Embodiment 1.

Next, the hot rolled sheet is subjected to a cold rolling process in which the sheet is subjected to pickling and then to cold rolling so as to be obtained as a cold rolled sheet. The conditions are not limited yet are preferably in the same range as in Embodiment 1.

The resultant cold rolled sheet is then subjected to an annealing process by subjecting the steel sheet to annealing to obtain a cold rolled annealed sheet. In the annealing process, the steel sheet is cooled after controlling the ferrite and austenite volume fractions at the time of annealing. The annealing temperature, holding time, average cooling rate, and overaging treatment conditions are not limited yet are preferably in the same range as in Embodiment 1.

The steel sheet may be subjected to tempering after annealing and cooling. This tempering is preferably treatment to hold the steel sheet at a temperature in a range of 100 °C to 600 °C for 5 s to 1800 s. Tempering is more preferably performed at 400 °C or higher for 60 s or more.

As in Embodiment 1, an additional process such as forming a galvannealed layer may be performed.

### EXAMPLES

### Example 1

The following describes an example related to Embodiment 1 of the present invention.

Thin steel sheets having the chemical composition listed in Table 1 and the tensile properties listed in Table 3 were prepared. These thin steel sheets are manufactured by a process such as the following. Each molten steel having the chemical composition listed in Table 1 was prepared by steelmaking and cast into a slab (steel material) with a thickness of 300 mm. Then, the slabs thus obtained were each heated to the heating temperatures listed in Table 2 before being subjected to hot rolling including finish rolling under the conditions listed in Table 2 and were subsequently cooled under the conditions listed in Table 2 and wound up into a coil at the coiling temperatures listed in Table 2 to yield hot rolled sheets (sheet thickness: 2.4 mm). Then, the hot rolled sheets thus obtained were each subjected to cold rolling under the cold rolling reduction rates listed in Table 2 to yield cold rolled steel sheets (sheet thickness: 1.2 mm). Subsequently, the cold rolled steel sheets thus obtained were each subjected to annealing process under the conditions listed in Table 2.

The resulting thin steel sheets (cold rolled annealed sheets) were subjected to microstructure observation and a tensile test. The testing method was as follows.

### (1) Microstructure Observation

A test piece for microstructure observation was collected from each of the resulting steel sheets, subjected to polishing on a sectional surface in a sheet thickness direction parallel to the rolling direction, and then etched with a 3 vol. % nital solution. A microstructure in a region from the steel surface to a ¼ position in the sheet thickness direction was observed using a scanning electron microscope (500x to 5,000x magnification) and imaged. Using the resulting micrograph, the microstructure was identified and the volume fraction and average grain size were calculated.

The average grain size of the ferrite phase was measured with a cutting method using the micrograph. To obtain the volume fraction of the ferrite phase, the micrograph was processed using commercially available image processing software (Paint Shop Pro Ver. 9, released by Corel Corporation) and binarized into the ferrite phase and the secondary phase. The proportion of the ferrite phase was measured and defined as the volume fraction of the ferrite phase.

The tempered martensite phase, tempered bainite phase, bainite phase, pearlite, and cementite that were the secondary phase were classified visually in the micrograph, and the volume fraction was calculated with the image processing software. Since it was difficult to measure the volume fraction of each of the bainite phase, tempered martensite phase, and tempered bainite phase accurately, the total volume fraction was calculated.

Furthermore, the volume fraction of the retained austenite phase was measured through X-ray diffraction. The steel sheet was ground to a position of 1/4 of the sheet thickness from the steel sheet surface, and then an additional 0.1 mm were chemically polished. On this ground and polished surface, by means of an X-ray diffractometer utilizing Kα X-ray radiation of Mo, integrated intensities were measured for (200), (220) and (311) planes of fcc iron and (200), (211) and (220) planes of bcc iron, and the volume fraction of the retained austenite was calculated from the integrated intensities. The aforementioned microstructure was subtracted from the total (100 %), and the remaining volume fraction was taken as the volume fraction of martensite.

### (2) Tensile Test

A JIS No. 5 test piece having a longitudinal direction (tensile direction) in a direction at 90 degrees from the rolling direction was collected in conformity with JIS Z 2201 from each resulting thin steel sheet and subjected to a tensile test at a tension speed of 10 mm/min, and in conformity with JIS Z 2241, tensile properties (tensile strength and yield point elongation) were measured. Table 3 shows the results of the tests.

[Table 1]

**Table 1**

| Steel No. | Chemical composition (mass%) | | | | | | |
|---|---|---|---|---|---|---|---|
| | C | Si | Mn | P | S | Al | N |
| A | 0.13 | 1.40 | 1.95 | 0.02 | 0.0013 | 0.025 | 0.0021 |
| B | 0.12 | 0.94 | 2.12 | 0.02 | 0.0013 | 0.025 | 0.0021 |
| C | 0.18 | 0.58 | 2.37 | 0.01 | 0.0029 | 0.034 | 0.0014 |
| D | 0.08 | 0.20 | 2.58 | 0.03 | 0.0022 | 0.019 | 0.0025 |
| E | 0.25 | 0.02 | 1.61 | 0.02 | 0.0030 | 0.024 | 0.0025 |

[Table]

**Table 2**

| Steel sheet No. | Steel No. | Sheet thickness (mm) | Hot rolling process | | | | Cold rolling | Annealing process | | | | | | |
|---|---|---|---|---|---|---|---|---|---|---|---|---|---|---|
| | | | Heating temperature (°C) | Finishing delivery temperature (°C) | Average cooling rate after completion of finish rolling (°C/s) | Coiling temperature (°C) | Cold rolling reduction rate (%) | Annealing | | | Overaging | | Tempering | |
| | | | | | | | | Temperature (°C) | Holding time (s) | Cooling rate (°C/s) | Temperature (°C) | Holding time (s) | Temperature (°C) | Time (s) |
| 1 | A | 1.2 | 1200 | 900 | 50 | 600 | 45 | 830 | 90 | 1000 | - | - | 400 | 600 |
| 2 | B | 1.2 | 1150 | 880 | 30 | 570 | 40 | 800 | 180 | 30 | - | - | 400 | 400 |
| 3 | C | 1.2 | 1250 | 950 | 70 | 500 | 35 | 850 | 60 | 15 | 400 | 150 | - | - |
| 4 | C | 1.2 | 1250 | 950 | 70 | 500 | 35 | 850 | 60 | 15 | 400 | 450 | - | - |
| 5 | C | 1.2 | 1250 | 950 | 70 | 500 | 35 | 880 | 60 | 100 | - | - | 350 | 1000 |
| 6 | D | 1.2 | 1100 | 920 | 20 | 620 | 50 | 870 | 120 | 1000 | - | - | 250 | 1800 |
| 7 | E | 1.2 | 1200 | 950 | 50 | 600 | 35 | 830 | 240 | 1000 | - | - | 300 | 1200 |
| 8 | A | 1.2 | 1200 | 900 | 50 | 600 | 45 | 830 | 90 | 1000 | - | - | - | - |

[Table]

**Table 3**

| Steel sheet No. | Steel No. | Microstructure | | | | | | | Tensile properties | | Notes |
|---|---|---|---|---|---|---|---|---|---|---|---|
| | | Type* | Ferrite phase | | T phase | | Other phase(s) | | Tensile strength TS (MPa) | Yield point elongation Y-El(%) | |
| | | | Volume fraction (%) | Average grain diameter (µm) | Volume fraction (%) | Average grain diameter (µm) | Volume fraction (%) | Average grain diameter (µm) | | | |
| 1 | A | F+T | 46 | 7.2 | 54 | 4.3 | - | - | 985 | 2 | Conforming example |
| 2 | B | F+T | 43 | 5.6 | 57 | 5.2 | - | - | 1028 | 2.9 | Conforming example |
| 3 | C | F+T+γ+M | 62 | 1.5 | 2 | 1.3 | γ:13 | γ:0.5 | 1052 | 1.0 | Comparative example |
| | | | | | | | M:23 | M: 1.9 | | | |
| 4 | C | F+T+γ+M | 3 | 2.6 | 95 | 5.6 | γ:1 | γ:0.8 | 1006 | 2.7 | Conforming example |
| | | | | | | | M:1 | M:1.3 | | | |
| 5 | C | F+T+γ | 2 | 2.6 | 97 | 5.6 | γ:1 | γ:0.8 | 1043 | 2.2 | Conforming example |
| 6 | D | T | - | - | 100 | 8.9 | - | - | 1035 | 4.2 | Conforming example |
| 7 | E | T | - | - | 100 | 5.6 | - | - | 999 | 5.6 | Conforming example |
| 8 | A | F+M | 46 | 7.2 | - | - | M:54 | M:4.3 | 1215 | 0 | Comparative example |

| | | | | | | | | | | | |
|---|---|---|---|---|---|---|---|---|---|---|---|
| *F: ferrite phase; T: total of tempered martensite phase, tempered bainite phase, and bainite phase; γ: retained austenite phase, M: martensite phase | | | | | | | | | | | |

These thin steel sheets were used as material steel sheets and bent to produce members with the cross-sectional shape illustrated in FIG. 2. An axial crushing test was then performed. The testing method was as follows.

### (3) Axial Crushing Test

A weight of 110 kgf at a speed corresponding to 50 km/h was caused to collide against each member in the axial direction so as to crush the member 160 mm. After being crushed, the deformation state of the member was visually identified, and the amount of energy absorbed until reaching a predetermined crush amount was calculated. In the present example, thin steel sheets having a tensile strength TS of 980 MPa or more and a yield point elongation Y-El of 2 % or more were used as the material steel sheets. On the other hand, in the comparative example, thin steel sheets having a tensile strength TS of 980 MPa or more and a yield point elongation Y-El of less than 2 % were used. Table 4 shows the results of the tests.

[Table 4]

**Table 4**

| Member No. | Steel sheet No. | Axial crushing test | | Notes |
|---|---|---|---|---|
| | | Deformation state after crushing | Absorbed energy (kJ) | |
| 1 | 1 | bellows shape | 9.1 | Inventive example |
| 2 | 2 | bellows shape | 8.9 | Inventive example |
| 3 | 3 | crack | 6.4 | Comparative example |
| 4 | 4 | bellows shape | 8.3 | Inventive example |
| 5 | 5 | bellows shape | 9.0 | Inventive example |
| 6 | 6 | bellows shape | 8.6 | Inventive example |
| 7 | 7 | bellows shape | 8.2 | Inventive example |
| 8 | 8 | crack | 6.2 | Comparative example |

In every case in the present example, the member stably buckled in the axial direction and underwent collapse deformation into a bellows shape. Moreover, the energy absorbed at the time of collision was a high value of 7.5 kJ or more, which means that the member has excellent collision energy absorbing performance. By contrast, for the comparative example, which was outside of the range of the present invention, the member fractured when crushed axially and did not undergo collapse deformation into a bellows shape. The energy absorbed at the time of collision was less than 7.5 kJ, which means that the member has poor collision energy absorbing performance.

### Example 2

The following describes an example related to Embodiment 2 of the present invention.

Each molten steel having the chemical composition listed in Table 5 was prepared by steelmaking and cast into a slab (steel material) in a thickness of 300 mm. Using these slabs, thin steel sheets (cold-rolled and annealed sheets) were obtained through the processes of hot rolling, cold rolling, and annealing. Table 5 also lists the tensile properties of the resulting thin steel sheets.

These thin steel sheets were used as material steel sheets and bent to produce members with the cross-sectional shape illustrated in FIG. 2. During production of the members, the rolling direction of the thin steel sheets was positioned to become the axial direction of the members.

Next, the resulting members were subjected to heat treatment under the conditions listed in Table 6.

An axial crushing test was then performed on the members subjected to heat treatment. A JIS No. 5 tensile test piece was collected from the flat portion of each resulting member so that the axial direction was in the tensile direction, and a tensile test was performed in conformity with JIS Z 2241. The microstructure of each member was also observed. The testing method was as follows.

### (1) Axial Crushing Test

A weight of 110 kgf at a speed corresponding to 50 km/h was caused to collide against each member in the axial direction so as to crush the member 160 mm. After being crushed, the deformation state of the member was visually identified, and the amount of energy absorbed until reaching a predetermined crush amount was calculated.

### (2) Tensile Test

From the flat portion of each resulting member, a JIS No. 5 test piece was collected so that the tensile direction was in the axial direction, in conformity with JIS Z 2201, and was subjected to a tensile test at a tension speed of 10 mm/min. In conformity with JIS Z 2241, tensile properties (tensile strength and yield point elongation) were measured.

### (3) Microstructure Observation

A test piece for microstructure observation was collected from the flat portion of each resulting member, and by the same method as in Example 1, the microstructure was identified and the volume fraction and average grain size were calculated.

Table 7 shows the results of the observation.

[Table 5]

**Table 5**

| Steel No. | Chemical composition (mass%) | | | | | | | Tensile properties | |
|---|---|---|---|---|---|---|---|---|---|
| | C | Si | Mn | P | S | Al | N | Tensile strength TS (MPa) | Yield point elongation Y-El(%) |
| A | 0.13 | 1.37 | 2.02 | 0.02 | 0.0013 | 0.025 | 0.0021 | 1215 | 0 |
| B | 0.11 | 0.90 | 1.52 | 0.01 | 0.0034 | 0.032 | 0.0021 | 1324 | 0 |
| C | 0.08 | 0.32 | 3.41 | 0.02 | 0.0015 | 0.021 | 0.0031 | 1092 | 0 |
| D | 0.09 | 0.20 | 1.71 | 0.03 | 0.0022 | 0.019 | 0.0025 | 1124 | 0 |
| E | 0.19 | 1.14 | 2.25 | 0.02 | 0.0024 | 0.031 | 0.0011 | 1296 | 0 |
| F | 0.26 | 0.03 | 2.03 | 0.01 | 0.0009 | 0.024 | 0.0022 | 1165 | 1.0 |

[Table 6]

**Table 6**

| Member No. | Steel sheet No. | Sheet thikness (mm) | Heat treatment conditions | | | Notes |
|---|---|---|---|---|---|---|
| | | | Heating temperature (°C) | Holding time (s) | Cooling rate (°C/s) | |
| 1 | A | 1.2 | 450 | 600 | 5 | Inventive example |
| 2 | B | 1.2 | 400 | 150 | 30 | Inventive example |
| 3 | C | 1.2 | 250 | 60 | 15 | Inventive example |
| 4 | D | 1.2 | 300 | 60 | 1000 | Inventive example |
| 5 | E | 1.2 | 400 | 300 | 30 | Inventive example |
| 6 | E | 1.2 | 550 | 120 | 50 | Inventive example |
| 7 | E | 1.2 | 720 | 30 | 1000 | Comparative example |
| 8 | E | 1.2 | 900 | 180 | 1000 | Comparative example |
| 9 | A | 1.2 | 170 | 1200 | 30 | Comparative example |
| 10 | F | 1.2 | 350 | 100 | 1000 | Inventive example |

[Table 7]

**Table 7**

| Member No. | Steel sheet No. | Microstructure | | | | | | | Tensile properties | | Axial crushability | | Notes |
|---|---|---|---|---|---|---|---|---|---|---|---|---|---|
| | | Type* | Ferrite phase | | T phase | | Other phase(s) | | Tensile strength TS (MPa) | Yield point elongation Y-El (%) | Absorbed energy (kJ) | Deformation state after crushing | |
| | | | Volume fraction (%) | Average grain diameter (µm) | Volume fraction (%) | Average grain diameter (µm) | Volume fraction (%) | Average grain diameter (µm) | | | | | |
| 1 | A | F+T | 51 | 6.9 | 49 | 4.1 | - | - | 1007 | 3.7 | 8.3 | bellows shape | Inventive example |
| 2 | B | F+T | 15 | 5.2 | 85 | 5 | - | - | 1084 | 3.1 | 8.7 | bellows shape | Inventive example |
| 3 | C | F+T+γ+M | 6 | 3.5 | 90 | 9.7 | γ: 2 | γ:0.6 | 1101 | 2.1 | 9.3 | bellows shape | Inventive example |
| | | | | | | | M: 2 | M:6.9 | | | | | |
| 4 | D | T | - | - | 100 | 6.8 | - | - | 992 | 3.1 | 8.6 | bellows shape | Inventive example |
| 5 | E | F+T+γ+M | 46 | 3.9 | 51 | 3.2 | γ:1 | γ:1.0 | 1064 | 2.2 | 8.6 | bellows shape | Inventive example |
| | | | | | | | M:2 | M: 2.8 | | | | | |
| 6 | E | F+T+γ | 46 | 3.7 | 52 | 3 | γ:2 | γ:1.0 | 1001 | 3.2 | 8.3 | bellows shape | Inventive example |
| 7 | E | F+T | 50 | - | 50 | 6.7 | - | - | 861 | 5.3 | 6.8 | bellows shape | Comparative example |
| 8 | E | T+M | - | - | 4 | 10.6 | M:95 | γ:1.5 | 1523 | 0 | 5.2 | crack | Comparative example |
| | | | | | | | γ:1 | | | | | | |
| 9 | A | F+T | 50 | 7.3 | 50 | 4.4 | - | - | 1186 | 1.1 | 6.2 | crack | Comparative example |
| 10 | F | T | - | - | 100 | 4.8 | - | - | 998 | 3.4 | 8.5 | bellows shape | Inventive example |

| | | | | | | | | | | | | | |
|---|---|---|---|---|---|---|---|---|---|---|---|---|---|
| * F: ferrite phase; T: total of tempered martensite phase, tempered bainite phase, and bainite phase; γ: retained austenite phase, M: martensite phase | | | | | | | | | | | | | |

Every case in the present example has a high strength, with a tensile strength TS of 980 MPa or more, and a yield point elongation of 2 % or more, underwent stable buckling axially, and underwent collapse deformation into a bellows shape. Moreover, the energy absorbed at the time of collision was a high value of 7.5 kJ or more, which means that the member has excellent collision energy absorbing performance. By contrast, for the comparative example, which was outside of the range of the present invention, the member fractured when crushed axially, and the energy absorbed at the time of collision was less than 7.5 kJ, which means that the member has poor collision energy absorbing performance.

### INDUSTRIAL APPLICABILITY

The present invention yields a vehicle collision energy absorbing member that, even with a tensile strength TS of 980 MPa or more, has excellent axial collision energy absorbing performance by absorbing collision energy through collapsing stably into a bellows shape upon collision, thus yielding a significantly advantageous effect in industrial terms. Furthermore, using the vehicle collision energy absorbing member according to the present invention as the front frame, rear frame, or the like contributes to reducing the weight of the vehicle body.

## Claims

1. A vehicle collision energy absorbing member formed by shaping a thin steel sheet,
at least one of the thin steel sheet and the vehicle collision energy absorbing member having tensile properties of a tensile strength TS of 980 MPa or more and a yield point elongation Y-E1 of 2 % or more.

2. The vehicle collision energy absorbing member according to claim 1, wherein
the thin steel sheet includes a chemical composition containing, by mass%:
C: 0.05 % to 0.30 %;
Si: 0.01 % to 1.6 %;
Mn: 1.0 % to 3.5 %;
P: 0.060 % or less;
S: 0.0050 % or less;
Al: 0.01 % to 1.5 %;
N: 0.0060 % or less; and
the balance being Fe and incidental impurities,
the thin steel sheet has a microstructure including, in volume fraction with respect to the entire microstructure, a ferrite phase by 0 % to 95 %, at least one selected from a tempered martensite phase, tempered bainite phase, and bainite phase by a total of 5 % to 100 %, and the balance being at least one selected from a martensite phase, retained austenite phase, pearlite, and cementite by a total of 0% to 5%, and
the thin steel sheet has the tensile properties of a tensile strength TS of 980 MPa or more and a yield point elongation Y-El of 2 % or more.

3. The vehicle collision energy absorbing member according to claim 1, wherein the vehicle collision energy absorbing member has the tensile properties of a tensile strength TS of 980 MPa or more and a yield point elongation Y-El of 2 % or more.

4. The vehicle collision energy absorbing member according to claim 3, wherein the vehicle collision energy absorbing member is formed by application of heat treatment in a temperature range of 200 °C or higher and lower than 700 °C after shaping.

5. The vehicle collision energy absorbing member according to claim 3 or 4, wherein
the vehicle collision energy absorbing member includes a chemical composition containing, by mass%:
C: 0.05 % to 0.30 %;
Si: 0.01 % to 1.6 %;
Mn: 1.0 % to 3.5 %;
P: 0.060 % or less;
S: 0.0050 % or less;
Al: 0.01 % to 1.5 %;
N: 0.0060 % or less; and
the balance being Fe and incidental impurities.

6. The vehicle collision energy absorbing member according to any one of claims 3 to 5, wherein the vehicle collision energy absorbing member has a microstructure including, in volume fraction with respect to the entire microstructure, a ferrite phase by 0 % to 80 %, at least one selected from a tempered martensite phase, tempered bainite phase, and bainite phase by a total of 20 % to 100 %, and the balance being at least one selected from a martensite phase, retained austenite phase, pearlite, and cementite by a total of 0% to 5%.

7. A method for manufacturing a vehicle collision energy absorbing member, comprising:
(a) manufacturing a thin steel sheet having a tensile strength TS of 980 MPa or more;
(b) forming the thin steel sheet into a shape of a vehicle collision energy absorbing member; and
(c) after step (b), applying heat treatment to the vehicle collision energy absorbing member by maintaining the vehicle collision energy absorbing member for 50 s or more in a heating temperature range of 200 °C or higher and lower than 700 °C to set tensile properties of the vehicle collision energy absorbing member to a tensile strength TS of 980 MPa or more and a yield point elongation Y-El of 2 % or more.

8. The method according to claim 7, wherein
the thin steel sheet includes a chemical composition containing, by mass%:
C: 0.05 % to 0.30 %;
Si: 0.01 % to 1.6 %;
Mn: 1.0 % to 3.5 %;
P: 0.060 % or less;
S: 0.0050 % or less;
Al: 0.01 % to 1.5 %;
N: 0.0060 % or less; and
the balance being Fe and incidental impurities.
